# EUROPÄISCHE PATENTANMELDUNG

(11) **EP 3 121 479 A1**
(43) Veröffentlichungstag der Anmeldung: **25.01.2017**
(21) Anmeldenummer: 16173493.4
(22) Anmeldetag: 08.06.2016
(51) Int. Cl.: F16F 9/49

(54) **TELESKOP-SCHWINGUNGSDÄMPFER MIT HYDRAULISCHEM ENDANSCHLAG**

(30) Priorität: 06.07.2015 DE 102015212621
(71) Anmelder: Bayerische Motoren Werke Aktiengesellschaft, 80809 München (DE)
(72) Erfinder: Käfer, Thomas, 82362 Weilheim (DE); Schulz, Steffen, 82178 Puchheim (DE)

(57) **Zusammenfassung**

Nach der Erfindung ist ein Teleskop-Schwingungsdämpfer, mit in einem mit Dämpfungsfluid gefüllten Arbeitszylinder (7) verschiebbaren Kolben (6) mit Kolbenstange (1), der den Raum im Arbeitszylinder (7) in zwei über Dämpfungsventile miteinander in Verbindung stehende Arbeitsräume (8,9), einen kolbenstangenseitigen (8) und einen kolbenseitigen (9), teilt und mit einer am Arbeitszylinderende den kolbenstangenseitigen Arbeitsraum (8) verschließenden Kolbenstangenführung (10) an die in diesem ein hydraulischer Zuganschlag anschließt, bestehend aus einer zylinderförmigen oder konischen Durchmesserverkleinerung des kolbenstangenseitigen Arbeitsraums (8), die mit einem auf der Kolbenstange (1) befestigten Zusatzkolben (2) so zusammenwirkt, dass auf die Kolbenstange (1) auf ihrem Weg zu einer Endanschlagsposition mit maximaler Ausfederstellung eine zunehmende Dämpfkraft wirkt, dadurch gekennzeichnet, dass der Zusatzkolben (2) so an der Kolbenstange (1) angebracht ist, dass ein Abstand (3), zwischen einem Ende (20) der Durchmesserverkleinerung des kolbenstangenseitigen Arbeitsraums (8) in Kolbenrichtung und einer radial ausgerichteten Mittenebene (2') des Zusatzkolbens (2), in Neutrallage des Kolbens (6) im Arbeitszylinder (7), wenigstens 10, bis höchstens 35 Millimeter misst.

## Beschreibung

Die Erfindung betrifft einen Teleskop-Schwingungsdämpfer mit hydraulischem Endanschlag für ein Kraftfahrzeug nach dem Oberbegriff des ersten Anspruchs.

Es ist bereits bekannt, Teleskop-Schwingungsdämpfer mit einem Zuganschlag auszustatten. Dieser kann zum Beispiel durch eine eine Kolbenstange umgebende Schraubenfeder gebildet sein, wie in der DE 10 2004 007 961 beschrieben.

Außerdem ist bekannt, Teleskop-Schwingungsdämpfer mit in einem mit Dämpfungsfluid gefüllten Arbeitszylinder verschiebbarem Kolben mit Kolbenstange, der den Raum im Arbeitszylinder in zwei über Dämpfungsventile miteinander in Verbindung stehende Arbeitsräume teilt und zum Beispiel bei Zweirohrdämpfern, mit einem Außenrohr, dem Tragrohr und einem Innenrohr, die mit einem Dichtungsführungselement zum Durchtritt der Kolbenstange verschlossen sind, mit einem hydraulischen Endanschlag im Falle eines vollständigen Ausfahrens der Kolbenstange vorzusehen. Die US 2012/ 0090931 A1 beschreibt eine solche Funktion für einen Schwingungsdämpfer zur Beseitigung von Lastspitzen beim Ausfedern in den Endanschlag und zur Geräuschreduzierung.

Aufbauend auf diesem Stand der Technik liegt der Erfindung die Aufgabe zugrunde, einen Teleskop-Schwingungsdämpfer bereitzustellen, bei dem zur Auflösung eines Zielkonflikts Fahrdynamik/Komfort, für eine bessere Wankabstützung und besseren Komfort, bisher dafür verwendete Zuganschlagfedern im Arbeitszylinder des Schwingungsdämpfers entfallen können oder wenigstens deren Federrate reduziert werden kann.

Die Aufgabe wird erfindungsgemäß durch die Merkmale des ersten Anspruchs gelöst. Bevorzugte Ausgestaltungen der Erfindung beschreiben die abhängigen Ansprüche.

Nach der Erfindung ist ein Teleskop-Schwingungsdämpfer, mit in einem mit Dämpfungsfluid gefüllten Arbeitszylinder verschiebbaren Kolben mit Kolbenstange, der den Raum im Arbeitszylinder in zwei über Dämpfungsventile miteinander in Verbindung stehende Arbeitsräume, einen kolbenstangenseitigen und einen kolbenseitigen, teilt und mit einer am Arbeitszylinderende den kolbenstangenseitigen Arbeitsraum verschließenden Kolbenstangenführung an die in diesem ein hydraulischer Zuganschlag anschließt, bestehend aus einer zylindrischen oder zur Kolbenstangenführung hin sich konisch verjüngenden Durchmesserverkleinerung des kolbenstangenseitigen Arbeitsraums, die mit einem auf der Kolbenstange befestigten Zusatzkolben so zusammenwirkt, dass auf die Kolbenstange auf ihrem Weg zu einer Endanschlagsposition mit maximaler Ausfederstellung eine zunehmende Dämpfkraft wirkt, dadurch gekennzeichnet, dass der Zusatzkolben so an der Kolbenstange angebracht ist, dass ein Abstand, zwischen einem Ende der Durchmesserverkleinerung des kolbenstangenseitigen Arbeitsraums in Kolbenrichtung und einer radial ausgerichteten Mittenebene des Zusatzkolbens, in Neutrallage des Kolbens im Arbeitszylinder, wenigstens 10 Millimeter, bis höchstens 35 Millimeter misst.

Das hat den Vorteil, dass der hydraulische Endanschlag das Einzelsystem Zuganschlagfeder ersetzt oder dessen Federrate reduziert und dessen Funktion unter Komfortgewinn übernimmt, was eine frühzeitige Beruhigung des Fahrzeugaufbaus bei der Ausfederbewegung und zusätzlichen Energieabbau mit sich bringt. Die dadurch verbesserte Fahrdynamik ermöglicht eine Wankabstützung ohne spürbare Beeinflussung der Fahrzeugreaktion.

Bevorzugte Ausführungsformen von Teleskop-Schwingungsdämpfern sind dadurch gekennzeichnet, dass zur Durchmesserverkleinerung des kolbenstangenseitigen Arbeitsraums ein zylindrisches oder sich innen zur Kolbenstangenführung hin verjüngendes, konisches Rohr in den Arbeitszylinder eingesetzt ist. Wenn die Länge des Rohrs dann so gewählt ist, dass dieses von der Kolbenstangenführung so weit im Inneren entlang des Arbeitszylinders verläuft, dass, in Neutrallage des Kolbens im Arbeitszylinder, der Abstand eines kolbenseitigen Endes des Rohrs bis zur radial gerichteten Mittenebene des Zusatzkolbens wenigstens 10 Millimeter und höchstens 35 Millimeter beträgt, hat das den Vorteil, dass auf eine Verwendung einer Zuganschlagfeder verzichtet, oder deren Federrate deutlich reduziert werden kann, was bewirkt, dass beim Einfedern keine oder weniger Bewegungsenergie, die in der Zuganschlagfeder bei der Ausfederbewegung gespeichert wird, abgebaut werden muss. Außerdem verbessert die Erfindung mögliche Unstetigkeiten in der Fahrzeugreaktion, die beim Einsatz einer Zuganschlagfeder nach dem Stand der Technik bei Kurvenfahrt auftreten können.

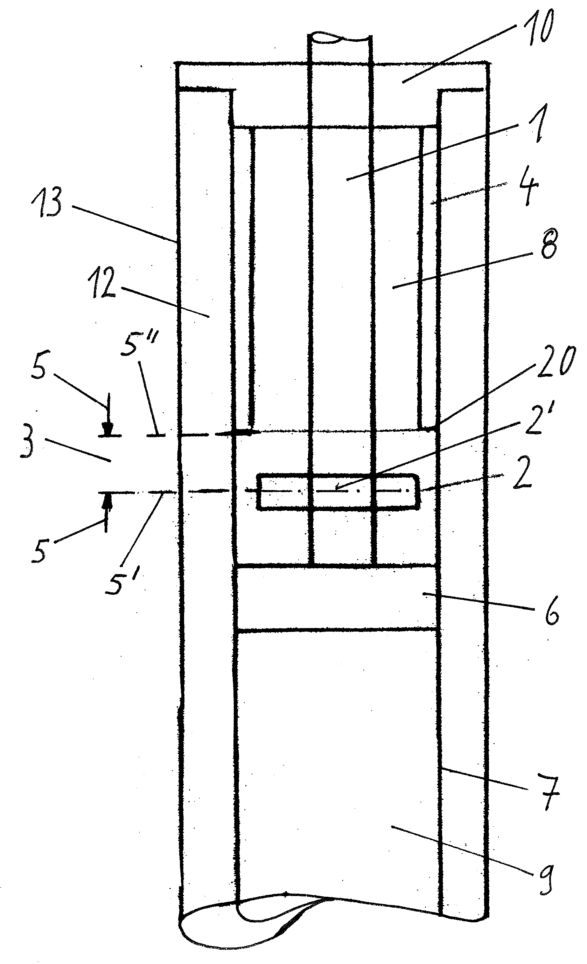

Nachfolgend wird ein bevorzugtes Ausführungsbeispiel eines erfindungsgemäßen Teleskop-Schwingungsdämpfers für eine Kraftfahrzeugradaufhängung anhand einer beigefügten schematischen Zeichnung näher erläutert. Die einzige Figur zeigt einen Teleskop-Schwingungsdämpfer im Schnitt, mit einer erfindungsgemäß ausgebildeten hydraulischen Dämpfeinrichtung, bei der sich die Verwendung einer Zuganschlagfeder erübrigt. In Axialrichtung des Schwingungsdämpfers ist zumindest der Bereich vom Zusatzkolben bis zum Beginn des zylindrischen Rohrs im Original-Maßstab, 1:1, dargestellt.

Es ist ein ölgefüllter Zweirohr-Teleskopschwingungsdämpfer für Kraftfahrzeuge dargestellt, bei welchem ein an einer Kolbenstange 1 befestigter ventilbestückter Kolben 6 einen Arbeitszylinder 7 in zwei Arbeitsräume, einen deckel- oder kolbenstangenseitigen Arbeitsraum 8 und einen bodenseitigen Arbeitsraum 9 unterteilt. Die Arbeitsräume 8, 9 sind mit Öl als Dämpfungsfluid gefüllt und stehen über ein im nicht gezeichneten Boden des Arbeitszylinders 7 angeordnetes, nicht gezeichnetes, Bodenventil bzw. über nicht gezeichnete Durchlässe im Bereich einer gleichzeitig als Dichtungsführungseinheit wirkenden Kolbenstangenführung 10 mit einem Ausgleichsraum 12 in Verbindung. Der Ausgleichsraum 12 ist koaxial um den Arbeitszylinder 7 angeordnet und ist nach außen durch ein Außenrohr 13 begrenzt. Der Ausgleichsraum 12 umfasst einen unteren Ölbereich und einen oberen Gasbereich. Die Funktionsweise des dargestellten Schwingungsdämpfers beim Dämpfen von Stößen ist dem Fachmann aus dem Stand der Technik geläufig. Der Arbeitszylinder 7 ist bodenseitig durch den Boden abgestützt und mit diesem fest verbunden. Deckelseitig weist der Arbeitszylinder 7 gegenüber dem Außenrohr 13 eine Abdichteinrichtung auf. Am zweiten, oberen Ende ist das Außenrohr 13 über die Kolbenstangenführung 10, zum Durchtritt der Kolbenstange 1, flüssigkeitsdicht verschlossen.

Ein hydraulischer Endanschlag, der im ringförmigen, kolbenstangenseitigen Arbeitsraum 8 anschließend an die Kolbenstangenführung 10 angeordnet ist, besitzt einen mit der Kolbenstange 1 verbundenen Zusatzkolben 2, der in seinem Durchmesser variierbar, zum Beispiel geschlitzt, sein kann und welcher mit einem als zylindrisches, oder als zur Kolbenstangenführung 10 hin sich im Innendurchmesser konisch verjüngendes, Rohr 4 ausgebildeten Dämpfring zusammenwirkt. Eine Zuganschlagfeder, die sich gewöhnlich einerseits im Bereich der Kolbenstangenführung 10 und andererseits auf einer mit der Kolbenstange 1 zusammenwirkenden Führungsbuchse abstützt, kann dann entfallen, wenn der Zusatzkolben 2 so an der Kolbenstange 1 angebracht ist, dass ein Abstand 3, zwischen einem Ende 20 der in dieser Figur zylinderförmigen Durchmesserverkleinerung des kolbenstangenseitigen Arbeitsraums 8 in Kolbenrichtung und einer radial ausgerichteten Mittenebene 2' des Zusatzkolbens 2, in Neutrallage des Kolbens 6 im Arbeitszylinder 7, wie gezeichnet, wenigstens zehn Millimeter, bis höchstens fünfunddreißig Millimeter, misst. Dieser Abstand 3, als Maß zwischen gestrichelt gezeichneten Bezugslinien 5', 5", gekennzeichnet mittels Maßpfeilen 5, bewirkt, dass der hydraulische Endanschlag in Zugrichtung die Schwingungsdämpferkennlinie zusätzlich beeinflusst, nämlich entsprechend der Wirkung einer Zuganschlagfeder auf die Schwingungsdämpferkennlinie. Realisiert wird dies durch das auf die oben genannten Abmessungen verlängerte Rohr 4 des Endanschlagsystems, so dass die entsprechenden Einsatzpunkte der entfallenden Zuganschlagfeder realisiert werden können. Die erforderlichen Kennungen lassen sich über Nuten, Bohrungen und Bypässe im Rohr 4 oder durch Bypässe im Zusatzkolben 2 realisieren. Außerdem kann der Zusatzkolben 2 auf der Kolbenstange 1 zur Abstimmung unterschiedlich durch nicht gezeichnete Bohrungen, Federn und/oder Federscheiben bestückt werden. Alternativ und nicht gezeichnet kann der Zusatzkolben 2 im Durchmesser veränderbar, zum Beispiel durch einen Schlitz, ausgebildet sein und so über das nicht gezeichnete, im Innendurchmesser sich zur Kolbenstangenführung 10 hin konisch verjüngende Rohr, das das zylindrische Rohr 4 in der nicht gezeichneten Ausführungsform ersetzt, ebenfalls Bypässe verändern.

Dadurch werden die Nachteile des Einbaus einer Zuganschlagfeder eliminiert und die Vorteile eines hydraulischen Endanschlagsystems zu einer Zuganschlagfeder entsprechenden hydraulischen Endanschlagdämpfung erweitert. Dazu liegt deren Einsatzpunkt auf dem Niveau der entfallenen Zuganschlagfeder.

## Patentansprüche

1. Teleskop-Schwingungsdämpfer, mit in einem mit Dämpfungsfluid gefüllten Arbeitszylinder (7) verschiebbaren Kolben (6) mit Kolbenstange (1), der den Raum im Arbeitszylinder (7) in zwei über Dämpfungsventile miteinander in Verbindung stehende Arbeitsräume (8, 9), einen kolbenstangenseitigen (8) und einen kolbenseitigen (9), teilt und mit einer am Arbeitszylinderende den kolbenstangenseitigen Arbeitsraum (8) verschließenden Kolbenstangenführung (10) an die in diesem ein hydraulischer Zuganschlag anschließt, bestehend aus einer zylindrischen oder zur Kolbenstangenführung (10) hin sich konisch verjüngenden Durchmesserverkleinerung des kolbenstangenseitigen Arbeitsraums (8), die mit einem auf der Kolbenstange (1) befestigten Zusatzkolben (2) so zusammenwirkt, dass auf die Kolbenstange (1) auf ihrem Weg zu einer Endanschlagsposition mit maximaler Ausfederstellung eine zunehmende Dämpfkraft wirkt, **dadurch gekennzeichnet, dass** der Zusatzkolben (2) so an der Kolbenstange (1) angebracht ist, dass ein Abstand (3), zwischen einem Ende (20) der Durchmesserverkleinerung des kolbenstangenseitigen Arbeitsraums (8) in Kolbenrichtung und einer radial ausgerichteten Mittenebene (2') des Zusatzkolbens (2), in Neutrallage des Kolbens (6) im Arbeitszylinder (7), wenigstens 10, bis höchstens 35 Millimeter misst.

2. Teleskop-Schwingungsdämpfer nach Anspruch 1, **dadurch gekennzeichnet, dass** zur Durchmesserverkleinerung des kolbenstangenseitigen Arbeitsraums (8) ein zylindrisches oder innen sich zur Kolbenstangenführung (10) hin sich verjüngendes, konisches Rohr (4) in den Arbeitszylinder (7) eingesetzt ist.

3. Teleskop-Schwingungsdämpfer nach Anspruch 2, **dadurch gekennzeichnet, dass**, die Länge des Rohrs (4) so gewählt ist, dass dieses, von der Kolbenstangenführung (10) aus, so weit im Inneren entlang des Arbeitszylinders (7) verläuft, dass, in Neutrallage des Kolbens (6) im Arbeitszylinder (7), der Abstand eines kolbenseitigen Endes (20) des Rohrs (4) bis zur radial gerichteten Mittenebene (2') des Zusatzkolbens (2) wenigstens 10 Millimeter und höchstens 35 Millimeter beträgt.
